# EUROPEAN PATENT SPECIFICATION

(11) **EP 1 906 070 B1**
(45) Date of publication and mention of the grant of the patent: **06.03.2013**
(21) Application number: 07253306.0
(22) Date of filing: 21.08.2007
(51) Int. Cl.: F16K 24/04, F16K 31/00, F24D 19/08

(54) **Automatic venting apparatus**
Automatisches Entlüftungsgerät
Purgeur d'air automatique

(30) Priority: 25.08.2006 GB 0616867
(43) Date of publication of application: 02.04.2008
(73) Proprietor: Heffernan, John Francis Steeple, Bishops Stortford Hertfordshire CM23 4QE (GB)
(72) Inventor: Heffernan, John Francis Steeple, Bishops Stortford Hertfordshire CM23 4QE (GB)
(74) Representative: Abraham, Richard

(56) References cited:
- EP-A2- 1 041 324
- GB-A- 1 185 852
- US-A- 1 575 247
- US-A- 2 823 693
- US-A- 4 216 791

## Description

The present invention relates to apparatus for automatically venting gas (e.g. air) from a system containing a liquid (e.g. water).

Automatic gas venting devices are used in industrial and commercial situations to expel gasses from a range of liquid-filled systems.

The most common domestic application is to vent or bleed air from water-filled heating systems. Typically, a domestic "central heating" system comprises of a plurality of radiators through which hot water is pumped. Central heating systems universally have a problem in that gas can collect in the radiators. The radiators are usually provided with a manual vent which can be opened by a user with a key to periodically vent or 'bleed' the system of air or gaseous products. However, as discussed below this system has a number of disadvantages.

When installing or refilling such a heating system a user must visit each radiator to manually vent air in order to fill or 'prime' the system with the initial charge of water. This is particularly problematic when a system has a particularly large number of radiators situated at many levels of a building.

Once the system is then operational, the user is required to periodically check each radiator and manually vent any air which is present. Air tends to leak into such system through a variety of sources, such as leaks in the connections in the system and through precipitation of dissolved gases in the liquid itself.

The gas collecting in the radiators prevents their proper function as it reduces the conduction of heat into the surrounding room and has long been identified as a cause of inefficiency in central heating systems and air conditioning systems. The gas also causes corrosion within the radiators, often greatly reducing their life. The corrosion then collects as 'sludge' in systems reducing the circulatory pump life and causing blockages in pipes and heating panels.

By the time the user has discovered the radiator has been operating inefficiently, heating losses have already occurred. The use of the, key may be frequent as some radiators require venting every few days. The vent screw in the radiators often jam and are difficult for the elderly or infirm to operate. Sometimes the vent screw is jammed such that it cannot be opened at all, or is difficult to open, and when vents do open, the operation may result in dark staining water pouring onto surrounding flooring (e.g. carpet).

There have been attempts to provide automatic venting devices in the prior art. However, these prior art devices tend to suffer from a number of disadvantages.

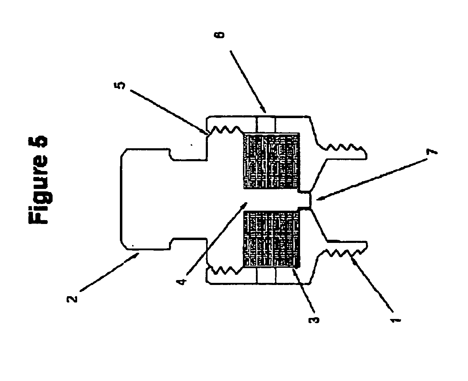

The majority of commercial devices that have been available to the consumer to fit directly to the radiator and available for many decades are the hygroscopic variety of de-aeration valve as illustrated in Figure 5.

These prior art devices comprise a housing member which attaches to the radiator via a thread 1 and comprise of a series of 'hygroscopic' washers 3 sitting on pin 4 which expand when immersed in water. A vent path is defined from inlet 7 around pin 4, through washers 3 and vent ports 6. The expanded 'plug' substantially blocks the egress of water from the system when wet. When the washers become exposed to air, evaporation allows them to shrink allowing the air to escape, and then to expand again when the water fills to the level of the valve. There are two varieties of prior art hygroscopic valves currently available: the adjustable type where adjustment to increase valve life is provided by rotation of knob 2 in threads 5 closing the gap in which the washers sit; and secondly, the non-adjustable type which offers no adjustment to the cavity in which the hygroscopic material sits.

Although cheap, this conventional system suffers from several disadvantages:
The hygroscopic material consists of natural fibre - often cellulose bonded wood pulp or vulcanised fibre of which both varieties expand when soaked with water and contract when dry. The seal is formed by the last washer 3 against the valve seat 4. The heated valve evaporates water from the washers through ports 6 and dry and contract when air arrives to the washers. The process of expanding and contracting over time compresses the fibre in the material causing permanent shrinkage of the hygroscopic washers and the valves to weep and eventually leak often within just a couple of heating seasons. In the manually adjustable variety of valve this shrinkage can be compensated for but not in the non-adjustable type - leading to leakage.

The manually adjusted type should be considered 'semi-automatic' as they require adjustment for the shrinking/ageing washers. In the case of this type of valve, the exercise becomes one of manual adjustment of the valve rather than one of venting the radiators. They still suffer from leakage when cold as the water doesn't evaporate sufficiently fast enough to prevent water droplets from forming outside the vent ports.

With the traditional system, the washers expand to close the valve against incoming water pressure; the force of the expanding washers holding directly against the incoming water pressure - the higher the pressure, the greater the opposing force the washers are required to exert in order to remain closed. Failure to remain closed against this pressure will cause leakage. In effect, in higher pressure systems the life of the valve is reduced, in some cases this can be as little as one year.

All of the traditional hygroscopic type of valves leak eventually at the end of their life and weep when cold at modest operating pressures.

'Open' central heating systems are fed via a tank situated higher than the highest radiator in the system in order to ensure the system is filled with water, but 'Closed systems' utilise an expansion vessel to pressurise the system in order to maintain a positive system pressure and the upper radiator in the building full of water. If these systems are continually vented to keep the system purged of gas the system pressure can drop causing some modern boilers to shut down and cease system heating. No mechanism is incorporated in the traditional automatic vent to compensate for this occurrence - in effect, they vent the system regardless of system pressure.

GB 1185852 discloses an automatic venting apparatus for venting air from hot water heating systems, the apparatus comprising a valve member including a hygroscopic material, The apparatus further comprises an outlet including water reservoir for preventing water from reaching the hydroscopic material until a minimum level of water has built up in the reservoir. EP 1 041 324 discloses the preamble of claim 1.

There exists a need, therefore, for an improved automatic venting device.

In accordance with the present invention, there is provided automatic venting apparatus for venting gas from a system containing a liquid, comprising: a body having an inlet and an outlet, with a passageway therebetween for venting gas received at the inlet through the body to the outlet; first valve means comprising a hygroscopic material, the first valve means being moveable between a first configuration in which the passageway is closed at a first location and a second configuration in which the passageway is open at the first location, with movement from the second configuration to the first configuration occurring when the hygroscopic material expands upon contact with liquid; wherein the apparatus further comprises at a second location second valve means comprising hygroscopic material, the second valve means being moveable between a first configuration and a second configuration with movement from the second configuration to the first configuration occurring when the hygroscopic material expands upon contact with liquid,
wherein movement of the second valve means from its second configuration to its first configuration acts to apply pressure to the first valve means for maintaining the first valve means in its first configuration.

In this way, automatic venting apparatus is provided in which a hygroscopic back-up valve comprising is provided for assisting operation of a primary hygroscopic valve when leaking occurs. In this way, the volume of the chamber housing the first valve means may be reduced as the second valve means moves into its first configuration - so acting as a safety cap. Advantageously, the back-up valve is not exposed to liquid during normal use and may act as a back-up system extending the life of the primary valve.

In addition, the second set of hygroscopic washers exhibit 'hysteresis' whereby each occurrence of drying leaves the second set of hygroscopic washers in a slightly larger condition than before. This property is exploited to ensure repeated use of the safety cap feature will result ultimately in the second valve applying increased pressure to the first valve members in order to maintain the first valve means in its first configuration.

The second location may be between the first location and the outlet.

The apparatus may further comprise a moveable valve seat located in the passageway between the first and second valve means, the moveable valve seat being configured to transfer pressure generated by the second valve means to the first valve means when the second valve means is in the first configuration. The moveable valve seat may act to constrain movement of the first valve means.

The body may further define a connector for connecting the inlet to the system.

An embodiment of the present invention will now be described by way of example with reference to the accompanying drawings, in which:
Figure 1 is a cross-sectional view of an automatic venting device according to a first embodiment of the present invention in the un-activated state;
Figure 2 is a cross-sectional view of the automatic venting device of Figure 1 with the primary venting device activated in low pressure operation;
Figure 3 is a cross-sectional view of the automatic venting device of Figure 1 with the primary venting device activated in high pressure operation;
Figure 4 is a cross-sectional view of the automatic venting device of Figure 1 with the secondary venting device activated;
Figure 5 is a cross-sectional view of an automatic venting device according to the prior art; and
Figure 6 is a cross-sectional view of an automatic venting device in accordance with a second embodiment of the present invention.

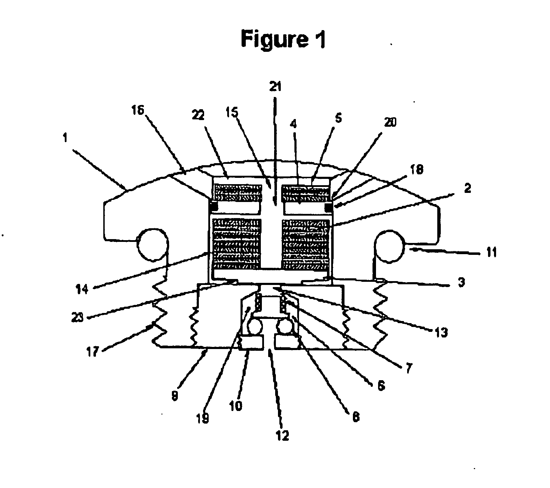

Turning to figure 1 a venting device for the present invention is shown comprising a body 1 comprising an inlet (or opening) 12 and vent ports 16 open to the atmosphere, with an enclosed passageway extending therebetween. The body 1 defines a connector portion 17 for connection to radiators and the like. The connector portion 17 includes opening 12 leading to a chamber 19 in which is housed a 'check valve' or pressure relief valve comprising of a closing member or piston 6 an o-ring seal 8 and spring 7 acting to close the vent path until a pre-determined pressure difference is attained between orifice 12 and chamber 19. Conveniently, the spring 7 is selected to exert a pre-set force on the piston 6. The operation is such that when pressure at orifice 12 is greater than that exerted by spring 7 an open vent path will be defined through o-ring seal 8, past piston 6 and through orifice 13. When pressure in orifice 12 is equal to that exerted by spring 7 the piston 6 closes against o-ring seal 8 which closes against seat 10 and no venting may occur.

The usefulness of a check valve is two-fold, firstly, in closed central heating systems some boilers may temporarily shut down when the pressure drops below a pre-set pressure - typically in the 0.2 - 0.5 bar range causing suspension of the system operation, the inclusion of a check valve within the present invention prevents continual venting of air from the system even below the boiler shut-off pressure, thus preventing boiler shutdown, secondly, the check valve acts as a one-way valve preventing air being drawn in to the valve should atmospheric pressure exceed internal heating system pressure. Heating system pressure can fall into a 'vacuum state' in some systems where radiators are placed higher than the feed water tank. In these systems the pump can feed water to the top radiators under pressure but when not pumping a vacuum can form in the upper radiators. In addition, radiators near to the suction side of a system pump can have local areas of vacuum when the pump runs.

Chamber 19 also comprises of a vent port 13 which is in fluid communication with said chamber leading to a second chamber 14. The second chamber 14 contains a seal 3 acting upon port 13 on one of its surfaces and a plurality of hygroscopic washers 2 acting on seal 3 on one end and against a moveable valve seat 4 at their opposing end. Moveable valve seat 4 includes o-ring seal 18 for engaging an inner periphery of the passageway. Seal 3 may have a reduction in surface area as shown at 23 which serves to increase the force exerted from the hygroscopic washers 2 over the surface area at the orifice 13. A vent path is defined from orifice 13 connecting chambers 19 and 14, around seat 3, through hygroscopic washers 2 and through orifice 21 in moveable valve seat 4.

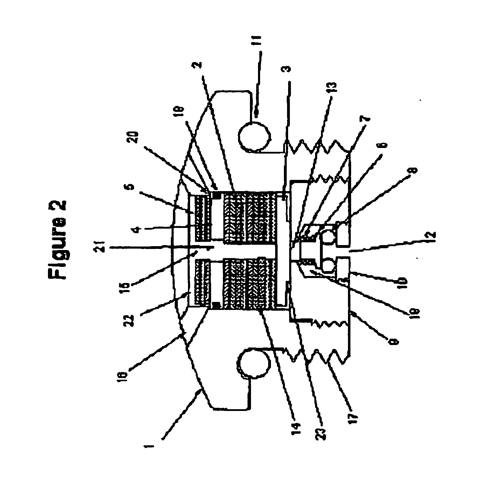

The operation is such that in the 'venting condition' - figure 1, pressurised air enters chamber 14 via orifice 13, when the hygroscopic washers are dry there exists no pressure acting from hygroscopic washers upon seal 3 and the air may pass unimpeded through the chamber 14 into the next chamber 22 via port 21. As air is purged through the valve it is followed by water which enters chamber 14 via orifice 13, the hygroscopic washers 2 expand and exert force upon moveable valve seat 4 at one end which is impeded by further movement by shoulder 20, at the other end the expanded washers exert pressure against seat 3 which closes reduced portion 23 against orifice 13 thus closing vent path through chamber 14. This condition is the 'expanded condition' as in figure 2, with chamber closed to further passage of air or water.

The usefulness of the valve member 3 forming a positive seal against orifice 13 rather than the prior art device whereby the hygroscopic washers form a partial seal against the orifice 13 is that the force that the hygroscopic washers exert on the valve member 3 may be increased against orifice 13 by reducing contacting surface area of seal 3 against said orifice at point 23, further, a positive seal is achieved with machined surface finishes closing together rather than the porous hygroscopic material closing against the orifice 13 which forms a partial seal and in which all the washers are in a partially wet and activated condition. The result is as hygroscopic washers wear through repeated usage, a sufficient pressure is still exerted between machined surfaces for a positive seal to be achieved, thus improving the operation of the valve and increasing the working life of the device. With- a positive seal the washers can be in a less activated condition which improves working life and lowers evaporation from the valve. Lower evaporation is desirable in closed systems as it reduces water loss and pressure drop.

Turning to figure 2, as the valve housing is attached to a radiator via connector 17, it is heated during its cycle of operation, this causes evaporation of wet washers with the evaporant passing through the axis of washers 2, through orifice 21, through axis of second set of hygroscopic washers 5 and to the atmosphere via vent ports 16. This drying action shrinks the hygroscopic washers 2 which releases pressure on valve seal 3 and opens port 13, effectively returning the valve to the 'open' condition as depicted in figure 1. The open valve may then vent unwanted air and complete a cycle again.

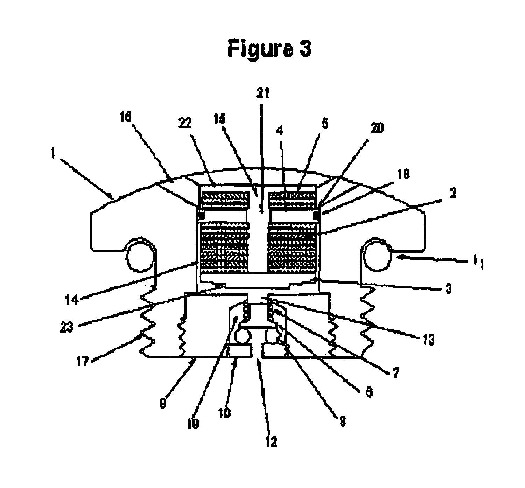

A further possible condition for the valves operation is depicted in figure 3 - high pressure operation. When the pressure inside chamber 19, and thus orifice 13 exceeds the force exerted by hygroscopic washers 2 on valve member 3 against port 13, seal 3 moves away from port 13 and seals against the compressible wet hygroscopic washers 2, which in turn seal against moveable valve seat 4. This compression of the washers 2 increases their density and impermeability to evaporating water, so at higher pressures though the seal 3 tends to cause a less positive seal against port 13 it forms a more positive seal against washers 2.

The usefulness of- this mode of operation is that - in comparison to the prior art device where no provision is made for higher pressure operation of the valve and the stack of hygroscopic washers tend to open at higher pressures and leak, in the current invention the valve member 3 seals against hygroscopic washers 2 and compresses them increasing their density and impermeability to the passage of water. In effect, in higher pressure conditions, the present invention compensates in a positive sealing manner.

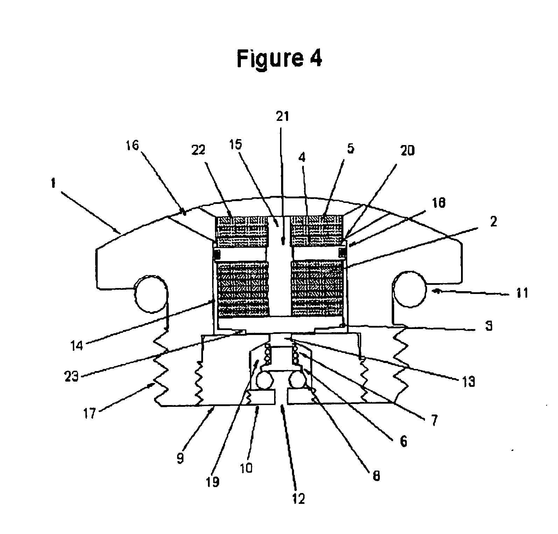

A further chamber 22 is in fluid communication with chamber 14 via orifice 21. Chamber 22 contains a plurality of hygroscopic washers 5 and a vent path is defined from orifice 21 in moveable valve seat 4, through the axis of hygroscopic washers 21 into chamber 22 and out to the atmosphere via a plurality of orifices or ports at 16. The operation is such that if water leaks from chamber 14, it passes through orifice 21 in moveable valve seat 4 and wets hygroscopic washers 5 causing them to expand as in figure 4. This expansion exerts pressure on seat 4 and moves it away from shoulder 20 causing compression of hygroscopic washers 2 in chamber 14 and, in turn, closure of seal 3 against port 13. In effect, the washers in chamber 22 act as a backup mechanism should washers in chamber 14 fail, this extends the life of the valve. The washers do not expand significantly during the normal evaporating process in chamber 14 so the backup system remains dormant until required in failure conditions.

Advantageously, the hygroscopic washers in the second and third chambers maintain the liquid element on the outside of the washers with a vent path from outside the washers to the holes inside the washers, allowing axial venting and the entire valve to be sunk inside the radiator tapping.

In another embodiment, valve seal member 3 may consist of an o-ring providing a seal whilst moved along its axis - sealing radially. Advantageously, such a valve seal member 'wipes' the valve seat each time it closes - so moving away any obstructing particles. A spring may be provided to 'release' the seal from its closed position.

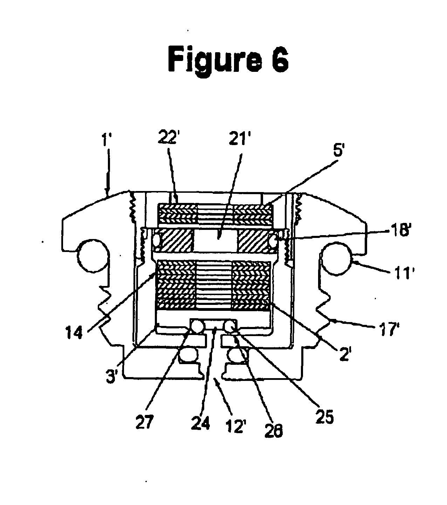

Figure 6 shows a further embodiment of the present invention. For the save of brevity, features in common with the first embodiment are labelled accordingly and will not be discussed. In the second embodiment, valve seat member 3' comprises of a cavity 24 containing an o-ring seal 25. Pressure exerted from expanded hygroscopic washers 2' on seal 3' will close o-ring 25 against valve seat inlet orifice seal surface 26. If water leaks past o-ring 25 into cavity 14', the hygroscopic washers 2' will expand further and force seal 3' to close protuberant cup edge 27 against valve seat inlet orifice seal surface 26 providing an auxiliary seal feature. Further, as the o-ring 25 and seal 3' may move independently of the hygroscopic washers 2', a vacuum created at the inlet will create a seal between the seal 3', o-ring 25 and inlet surface 26. Advantageously, central heating systems which cycle into negative pressure will not draw- air into the system through the valve member 3'.

## Claims

1. Automatic venting apparatus for venting gas from a system containing a liquid, comprising:
a body (1) having an inlet (12) and an outlet (16), with a passageway therebetween for venting gas received at the inlet (12) through the body (1) to the outlet (16);
first valve means comprising a hygroscopic material (2), the first valve means being moveable between a first configuration in which the passageway is closed at a first location and a second configuration in which the passageway is open at the first location, with movement from the second configuration to the first configuration occurring when the hygroscopic material (2) expands upon contact with liquid;
**characterised in that** the apparatus further comprises at a second location second valve means comprising hygroscopic material (5), the second valve means being moveable between a first configuration and a second configuration with movement from the second configuration to the first configuration occurring when the hygroscopic material (5) expands upon contact with liquid,
wherein movement of the second valve means from its second configuration to its first configuration acts to apply pressure to the first valve means for maintaining the first valve means in its first configuration.

2. Apparatus according to claim 1, wherein the second location is between the first location and the outlet (16).

3. Apparatus according to claim 1 or claim 2, further comprising a moveable valve seat (4) located in the passageway between the first and second valve means, the moveable valve seat (4) being configured to transfer pressure generated by the second valve means to the first valve means when the second valve means is in the first configuration.

4. Apparatus according to any of the preceding claims, wherein the body (1) defines a connector (17) for connecting the inlet (12) to the system.

## Patentansprüche

1. Automatische Entlüftungsvorrichtung zum Ablassen von Gas aus einem eine Flüssigkeit enthaltenden System, die Folgendes umfasst:
ein Gehäuse (1) mit einem Einlass (12) und einem Auslass (16), mit einem Kanal dazwischen zum Ablassen von am Einlass (12) aufgenommenem Gas durch das Gehäuse (1) zum Auslass (16);
eine erste Ventileinrichtung, die ein hygroskopisches Material (2) umfasst, wobei die erste Ventileinrichtung zwischen einer ersten Konfiguration, in der der Kanal an einer ersten Stelle geschlossen ist, und einer zweiten Konfiguration, in der der Kanal an der ersten Stelle offen ist, beweglich ist, wobei die Bewegung von der zweiten Konfiguration in die erste Konfiguration dann auftritt, wenn sich das hygroskopische Material (2) nach einem Kontakt mit Flüssigkeit ausdehnt;
**dadurch gekennzeichnet, dass** die Vorrichtung ferner an einer zweiten Stelle eine zweite Ventileinrichtung umfasst, die hygroskopisches Material (5) umfasst, wobei die zweite Ventileinrichtung zwischen einer ersten Konfiguration und einer zweiten Konfiguration beweglich ist, wobei die Bewegung von der zweiten Konfiguration in die erste Konfiguration dann auftritt, wenn sich das hygroskopische Material (5) nach einem Kontakt mit Flüssigkeit ausdehnt,
wobei eine Bewegung der zweiten Ventileinrichtung von ihrer zweiten Konfiguration in ihre erste Konfiguration bewirkt, dass die erste Ventileinrichtung mit Druck beaufschlagt wird, um die erste Ventileinrichtung in ihrer ersten Konfiguration zu halten.

2. Vorrichtung nach Anspruch 1, wobei sich die zweite Stelle zwischen der ersten Stelle und dem Auslass (16) befindet.

3. Vorrichtung nach Anspruch 1 oder Anspruch 2, die ferner einen beweglichen Ventilsitz (4) umfasst, der sich in dem Kanal zwischen der ersten und der zweiten Ventileinrichtung befindet, wobei der bewegliche Ventilsitz (4) so konfiguriert ist, dass er von der zweiten Ventileinrichtung erzeugten Druck auf die erste Ventileinrichtung überträgt, wenn die zweite Ventileinrichtung in der ersten Konfiguration ist.

4. Vorrichtung nach einem der vorherigen Ansprüche, wobei das Gehäuse (1) einen Verbinder (17) zum Verbinden des Einlasses (12) mit dem System definiert.

## Revendications

1. Appareil de purge automatique pour évacuer du gaz à partir d'un système contenant un liquide, comprenant :
un corps (1) possédant un orifice d'admission (12) et un orifice de sortie (16), avec un passage entre ceux-ci pour évacuer le gaz reçu au niveau de l'orifice d'admission (12) à travers le corps (1) vers l'orifice de sortie (16) ;
un premier moyen de soupape comportant une matière hygroscopique (2), le premier moyen de soupape pouvant être déplacé entre une première configuration, dans laquelle le passage est fermé au niveau d'un premier emplacement, et une seconde configuration, dans laquelle le passage est ouvert au niveau du premier emplacement, le mouvement à partir de la seconde configuration vers la première configuration se produisant lorsque la matière hygroscopique (2) connaît une expansion lors de son contact avec du liquide ;
**caractérisé en ce que** l'appareil comporte en outre, au niveau d'un second emplacement, un second moyen de soupape comportant une matière hygroscopique (5), le second moyen de soupape pouvant être déplacé entre une première configuration et une seconde configuration, alors que le mouvement à partir de la seconde configuration vers la première configuration se produit lorsque la matière hygroscopique (5) connaît une expansion lors de son contact avec du liquide,
cas dans lequel le mouvement du second moyen de soupape à partir de sa seconde configuration vers sa première configuration agit pour appliquer de la pression sur le premier moyen de soupape afin de maintenir le premier moyen de soupape dans sa première configuration.

2. Appareil selon la revendication 1, le deuxième emplacement se trouvant entre le premier emplacement et l'orifice de sortie (16).

3. Appareil selon la revendication 1 ou la revendication 2, comprenant en outre un siège de soupape mobile (4) lequel est positionné dans le passage entre le premier et le second moyen de soupape, le siège de soupape mobile (4) étant configuré de façon à transférer la pression générée par le second moyen de soupape au premier moyen de soupape lorsque le second moyen de soupape se trouve dans la première configuration.

4. Appareil selon l'une quelconque des revendications précédentes, le corps (1) définissant un raccord (17) pour raccorder l'orifice d'admission (12) au système.
